# EUROPEAN PATENT SPECIFICATION

(11) **EP 3 873 177 B1**
(45) Date of publication and mention of the grant of the patent: **20.11.2024**
(21) Application number: 21159288.6
(22) Date of filing: 25.02.2021
(51) Int. Cl.: H05B 6/12, H05B 6/06, H02J 50/12, H02J 50/60

(54) **WIRELESS POWER TRANSMISSION APPARATUS FOR INDUCTION HEATING AND CONTROL METHOD THEREOF**
VORRICHTUNG ZUR DRAHTLOSEN STROMÜBERTRAGUNG FÜR INDUKTIONSHEIZUNG UND STEUERUNGSVERFAHREN DAFÜR
APPAREIL DE TRANSMISSION D'ÉNERGIE SANS FIL POUR LE CHAUFFAGE PAR INDUCTION ET SON PROCÉDÉ DE COMMANDE

(30) Priority: 27.02.2020 KR 20200024268
(43) Date of publication of application: 01.09.2021
(73) Proprietor: LG Electronics Inc., Seoul 07336 (KR)
(72) Inventor: SEONG, Hojae, Seoul 08592 (KR); KIM, Euisung, Seoul 08592 (KR); OK, Seungbok, Seoul 08592 (KR)
(74) Representative: Ter Meer Steinmeister & Partner

(56) References cited:
- WO-A1-2020/008557
- CN-U- 209 844 605
- US-A1- 2014 158 680

## Description

### BACKGROUND OF THE INVENTION

### Field of the invention

The present invention relates to a wireless power transmission apparatus, and more particularly, to a wireless power transmission apparatus for induction heating and a control method thereof.

### Description of the Related Art

Wireless charging refers to a method of charging a device by wirelessly transmitting power through the atmosphere instead of a method of charging a device by transmitting power by wire.

According to the basic principle of wireless charging, when alternating current (AC) flows in a transmission coil, a battery is charged by forming a magnetic field around a transmission coil, allowing AC to flow in a reception coil due to influence of the magnetic field, and rectifying the AC.

Various small-size kitchen utensils used in a kitchen, that is, small home appliances require power supply, and thus, receive power by connecting an electric cord (power connection cable) that is separately included in electronic devices to a socket. In this case, there is a problem in that a plurality of electric cords adversely affects management, safety, or space utilization.

Thus, recently, the demand for wireless power charging of small home appliances used in a kitchen has rapidly increased.

Devices that need to be heated using induced current among small home appliances used in a kitchen have increasingly been spread.

Such a heating device using induced current uses an induction method of heating the device via electron induction by generating a magnetic field and is operated in the same way as an electric range.

That is, a general electron induction heating device allows high-frequency current to flow in a working coil or heating coil installed therein.

When the high-frequency current flows in the working coil or the heating coil, a strong line of magnetic force is generated. The line of magnetic force generated in the working coil or the heating coil forms eddy current while being transmitted through a cooking tool. Thus, as eddy current flows in a cooking tool, heat is generated to heat a container itself, and materials in the container are heated as the container is heated.

Such an induction heating device is disclosed in detail in Korean Patent Publication No. 1 0-2016-0123672.

As disclosed in Korean Patent Publication No. 10-2016-0123672, there is the increasing demand for a multi-functional wireless power transmission device that is capable of performing wireless charging as well as induction heating depending on a type of a small home appliance used in a kitchen.

The multi-functional wireless power transmission device is capable of performing induction heating or wireless power transmission by changing a frequency using one working coil or heating coil according to mode selection of a user.

When induction heating or wireless power transmission is performed on a target small home appliance of the multi-functional wireless power transmission device, it is required that a reception coil and working coil of the target small home appliance are aligned with each other and foreign objects are not present between the reception coil and the working coil.

When foreign objects are present between a reception coil and a working coil, remarkably high consumption power is generated depending on a material of the foreign object, and there is a risk of ignition or fuming depending on the size and material of the foreign object.

When a foreign object is present, wireless power transmission between a reception coil and a working coil is impeded and transmission efficiency is remarkably lowered.

To prevent this, Korean Patent Publication No. 2017-0043774 discloses a wireless charging apparatus having a function of detecting a foreign object, in which the foreign object is detected by measuring current and voltage of a transmission coil, that is, a working coil during wireless charging.

That is, when a variation of current and voltage of the transmission coil is equal to or greater than a reference value, a foreign object is determined to be present.

According to the prior art, when a foreign object is present, a minute variation of current and voltage of a transmission coil is detected, but in the case of wireless charging for a small home appliance used in a kitchen like in the present invention, it is difficult to detect such a minute variation when transmission power is very high.

U.S. Patent No. 10097052 discloses an electrode and an auxiliary circuit for detecting a transmission coil and a foreign object, which measures an impedance change and recognizes presence of a foreign object.

As disclosed in Korean Patent Publication No. 2012-0074087, a response signal from a reception target object is analyzed and whether a foreign object is present is determined.

In the case of such prior art, a complicated auxiliary circuit is required or a reception signal from a target object needs to be analyzed, and thus, various sensors between a matching network and a transmission antenna are required.

### [Cited Reference] / [Patent Document]

Korean Patent Registration No. 17-6449681 (Registered on July 27, 2017)
Korean Patent Publication No. 2017-0043774 (Published on December 26, 2014)
US Patent No. 10097052 (Published on February 15, 2018)
Korean Patent Publication No. 2012-0074087 (Published on January 22, 2014)
US 2014/158680 A1 relates to a contactless power feeder including: a top plate which is mounted with a load; a primary coil which is arranged below the top plate and generates a high-frequency field; an inverter which feeds high-frequency power to the primary coil; a control part which controls the inverter; and a load discriminating part which determines whether the load is an object to be heated that is a metal container such as a pot and should be induction-heated, or a power receiving device provided with a secondary coil that is electromagnetically coupled with the primary coil, wherein the control part is configured to control the inverter in accordance with a result of determination by the load discriminating part.

### SUMMARY OF THE INVENTION

A first objective of the present invention is to provide a wireless power transmission apparatus for detecting whether a foreign object is present for safe driving, compensating for this, and performing wireless power transfer (WPT) when a multi-functional wireless power transmission device using one working coil is in a wireless power transmission mode.

A second objective of the present invention is to provide a wireless power transmission apparatus that uses a preparation period prior to wireless power transfer (WPT) from a positioned target small home appliance when user mode selection is a wireless power transmission mode, determines whether a foreign object is present in the preparation period, removes the foreign object through an alarm or the like, and then, safely starts wireless power transfer (WPT).

A third objective of the present invention is to provide a wireless power transmission apparatus for determining whether a foreign object is present simply by detection from a transmission side without communication with a corresponding small home appliance when a wireless power transmission mode is selected, if a target object is a small home appliance having a reception coil. That is, as disclosed in Korean Patent Publication No. 2012-0074087, the present invention provides a wireless power transmission apparatus for determining whether a foreign object is present without various communication devices and interpretation algorithms for receiving and analyzing a signal from a reception side.

As disclosed in Korean Patent Publication No. 2017-0043774 and US Patent No. 10097052, a fourth objective of the present invention is to provide a method of determining a foreign object with enhanced accuracy by combining a plurality of parameters but not one detection value and determining whether the foreign object is present without a separate sensor or a detection circuit.

The object is solved by the features o the independent claims. Preferred embodiments are given in the dependent claims.

In accordance with the present invention, the above and other objects can be accomplished by the provision of a wireless power transmission apparatus for induction heating including a working coil configured to change a mode depending on selection of a user, to vary an operation frequency depending on the mode, and to induction-heat a target object, or to wirelessly transmit power to the target object, an inverter that is turned on and off depending on the operation frequency and configured to generate the power, and a controller configured to determine whether a foreign object is positioned on the working coil in a preparation period prior to wireless power transfer (WPT) when the user selects a wireless power transmission mode.

In accordance with the present invention a wireless power transmission apparatus is provided for induction heating and for wirelessly transmitting power to a target object comprising: a working coil configured to induction-heat the target object, and to wirelessly transmit power to the target object depending on a selected mode; an inverter configured to be operated based on an operation frequency for providing power to the working coil;;and a controller configured to change the mode depending on a selection of a user and to control the operation frequency depending on the mode, wherein the controller is configured to determine whether a foreign object is positioned on the working coil in a preparation period prior to wireless power transfer (WPT) when the user selects a wireless power transmission mode.

Preferably, the controller may be configured to determine whether a foreign object is positioned on the working coil over a plurality of modes in a preparation period.

The controller may include the preparation period prior to a normal mode for performing the wireless power transfer (WPT).

Preferably, when the preparation period begins, a first foreign object detection mode is executed and a second foreign object detection mode is executed to determine whether a foreign object is present on the working coil before the preparation period is terminated.

The wireless power transmission apparatus may further include an upper glass on which the target object is positioned.

The wireless power transmission apparatus further include a user input unit configured to receive a mode selection from the user.

When receiving mode selection information from the user input unit, the controller may read input current and resonance current and may determine whether the foreign object is present while entering the first foreign object detection mode and driving the inverter with respect to a start frequency and an operation frequency.

The controller may determine whether the foreign object is present based on a difference in the input current at the operation frequency and the start frequency in the first foreign object detection mode.

The controller is configured to read the resonance current and the input current a plurality of times for a predetermined time period, perform integration on each of the resonance current and the input current, and determine whether the foreign object is present based on an integrated value.

When determining that the foreign object is present, the controller may guide removal of the foreign object through a user alarm.

When an integrated value of the resonance current is equal to or greater than a first threshold value and an integrated value of the input current is equal to or greater than a second threshold value, the controller may determine that a foreign object is not present.

When a deviation in an integrated value of the input current is between a first value and a second value, the controller may determine that the foreign object is present.

The controller may count the resonance current and the input current at a zero-voltage point of main power.

When entering the second foreign object detection mode, the controller may read the resonance current and may compare the resonance current with a reference value while driving the inverter at the operation frequency.

The wireless power transmission apparatus for induction heating may store a value of resonance current for the plurality of operation frequencies when a foreign object is not present, as the reference value.

While sweeping the operation frequency for a predetermined time period, the controller may detect resonance current at the swept operation frequency, may compare the detected integrated value of resonance current with an integrated value of a reference value of resonance current at the swept operation frequency, and may determine whether the foreign object is present.

In accordance with another aspect of the present invention, a method of driving a wireless power transmission apparatus for induction heating including a working coil configured to change a mode depending on selection of a user, to induction-heat a target object depending on the mode, or to wirelessly transmit power to the target object includes checking that selection information of the user is a wireless power transmission mode, a preparation operation of detecting the target object, and determining whether a foreign object is positioned on the working coil while varying an operation frequency of an inverter for wireless power transfer, and a normal operation mode operation of performing the wireless power transfer on the target object that is capable of performing the wireless power transfer at the operation frequency.

The preparation operation may include a first foreign object detection operation of reading resonance current and input current and determining whether the foreign object is present while driving the inverter at a start frequency and a specific operation frequency, and a second foreign object detection operation of reading the resonance current and re-determining whether the foreign object is present while driving the inverter at the specific operation frequency prior to the normal operation mode.

The first foreign object detection operation may include determining whether the foreign object is present based on a difference in the input current at the operation frequency and the start frequency.

The first foreign object detection operation may include reading the resonance current and the input current a plurality of times for a predetermined time period, performing integration on each of the resonance current and the input current, and determining whether the foreign object is present based on an integrated value.

The method may further include, when determining that the foreign object is present, guiding removal of the foreign object through a user alarm.

The first foreign object detection operation may include determining that a foreign object is not present when an integrated value of the resonance current is equal to or greater than a first threshold value and an integrated value of the input current is equal to or greater than a second threshold value.

The first foreign object detection operation may include determining that the foreign object is present when a deviation in the integrated value of the input current is between a first value and a second value.

The first foreign object detection operation and the second foreign object detection operation may include counting the resonance current and the input current at a zero-voltage point of main power.

The second foreign object detection operation may include reading the resonance current and comparing the resonance current with a reference value while driving the inverter at the specific operation frequency.

The second foreign object detection operation may include, while sweeping the operation frequency for a predetermined time period, detecting resonance current at the swept operation frequency, comparing the detected integrated value of resonance current with an integrated value of a reference value of resonance current at the swept operation frequency, and determining whether the foreign object is present.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is an upper perspective view of a wireless power transmission apparatus for induction heating according to an embodiment of the present invention;
FIG. 2 is a cross-sectional view of the wireless power transmission apparatus for induction heating of FIG. 1;
FIG. 3 is a circuit diagram for explaining an induction heating state according to an embodiment of the present invention;
FIG. 4 is a circuit diagram for explaining wireless power transfer (WPT) of a wireless power transmission apparatus for induction heating according to an embodiment of the present invention;
FIG. 5 is a schematic flowchart of a mode of a wireless power transmission apparatus for induction heating according to an embodiment of the present invention;
FIG. 6 is a diagram showing a structure of a transmission apparatus and a reception apparatus with respect to the flowchart of FIG. 5;
FIG. 7 is a flowchart of first foreign object determination in a wireless power transmission mode of a wireless power transmission apparatus for induction heating according to an embodiment of the present invention;
FIGs. 8 to 10 are graphs for explaining FIG. 7;
FIG. 11 is a flowchart of second foreign object determination in a wireless power transmission mode of a wireless power transmission apparatus for induction heating according to an embodiment of the present invention; and
FIGs. 12 and 13 are graphs for explaining FIG. 11

### DETAILED DESCRIPTION OF THE PREFERRED EMBODIMENTS

Terms indicating directions, such as "front (F)/rear (R)/left (Le)/ right (Ri)/up (U)/down (D)" used below are defined based on the accompanying drawings, but they are used only to promote a clear understanding of the present invention, and the definition of directions is changed according to a reference.

Terms such as "first" and "second" are used herein merely for the purpose of distinguishing one constituent element from another constituent element, and do not define the order, importance, or master-servant relationship of components. For example, it may be possible to embody the invention so as to include only the second component without the first component.

Components in the following drawings may be exaggerated, omitted, or schematically illustrated for convenience and clarity of explanation. The sizes and areas of the components do not accurately reflect their actual sizes.

In addition, angles and directions used in description of the configuration of the present invention are based on the accompanying drawings. If a reference or a positional relationship between angles is not clearly set forth in the description of the configuration in the specification, the related drawings are to be referred to.

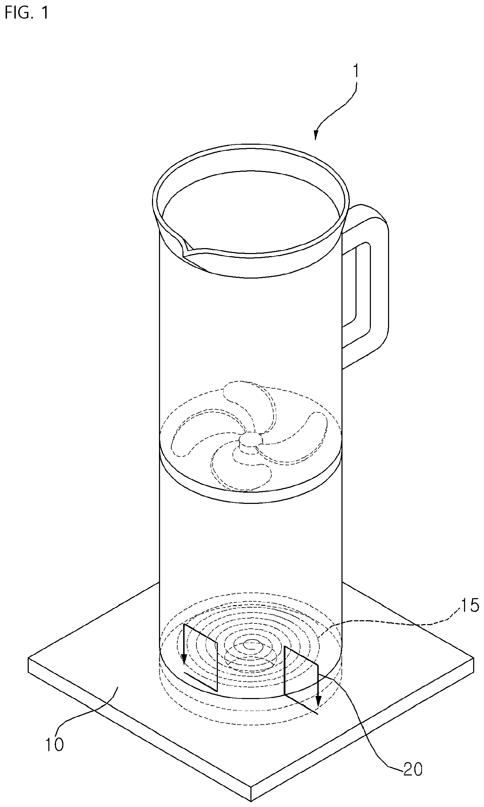

Hereinafter, a wireless power transmission apparatus for induction heating will be described in detail with reference to FIGs. 1 to 4.

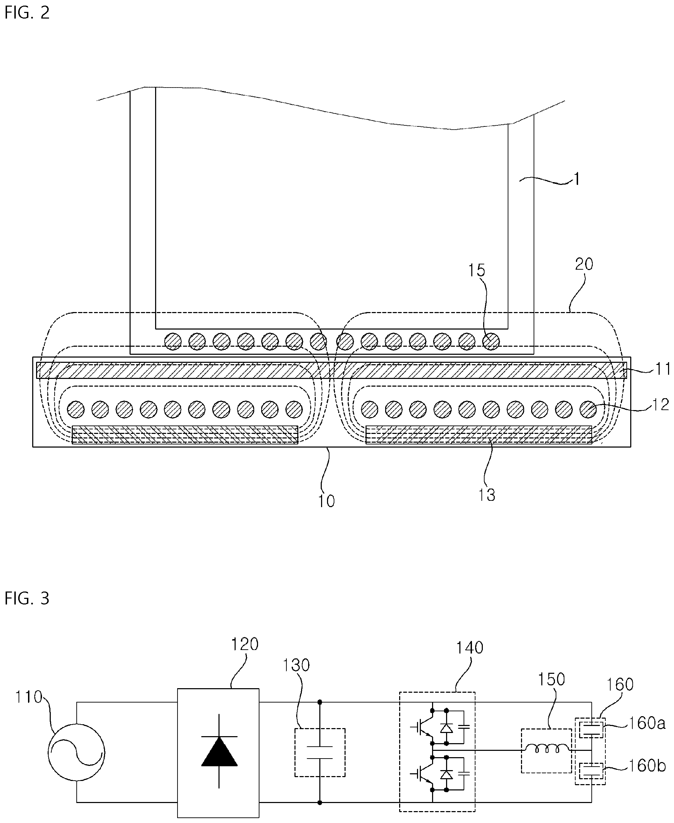

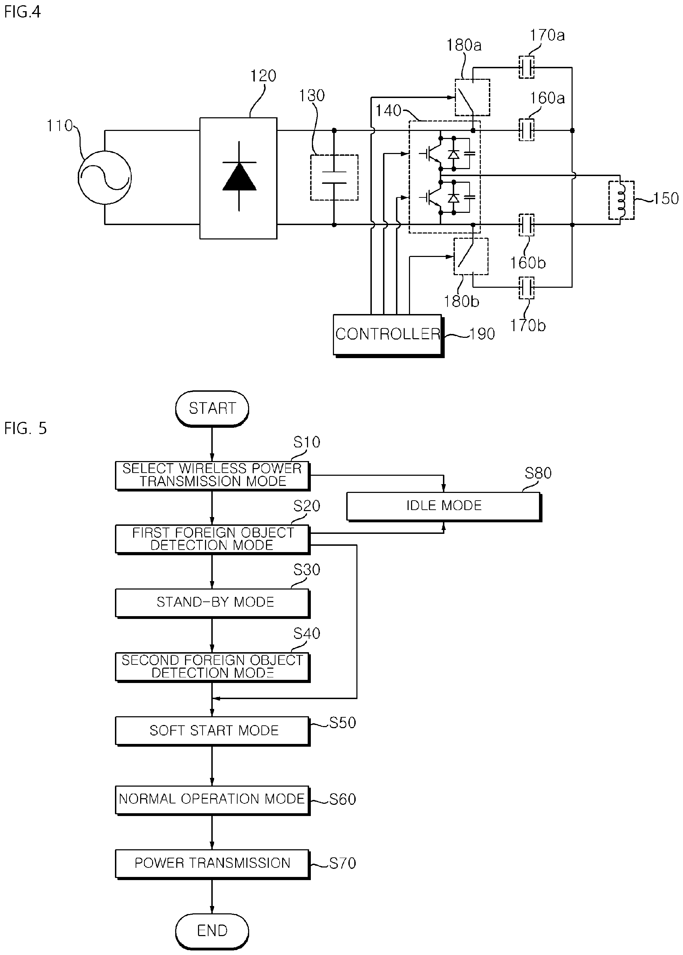

FIG. 1 is an upper perspective view of a wireless power transmission apparatus for induction heating according to an embodiment of the present invention. FIG. 2 is a cross-sectional view of the wireless power transmission apparatus for induction heating of FIG. 1. FIG. 3 is a circuit diagram for explaining an induction heating state according to an embodiment of the present invention. FIG. 4 is a circuit diagram for explaining wireless power transfer (WPT) of a wireless power transmission apparatus for induction heating according to an embodiment of the present invention.

Referring to FIGS. 1 and 2, a target object 1 can be positioned on a wireless power transmission apparatus 10. The wireless power transmission apparatus 10 can heat the target object 1 positioned thereon or can wirelessly transmit power to the target object 1.

The target object 1 can be a small home appliance having a reception coil 15, a small home appliance that does not have the reception coil 15, a general heating cooking container that is not an electronic product, or a foreign object.

The small home appliance having the reception coil 15 can wirelessly receive power using the reception coil 15 through the wireless power transmission apparatus 10 and can perform a main operation using the corresponding power. For example, the small home appliance can be a wireless blender or a wireless oven toaster.

The small home appliance that does not have the reception coil 15 can be a home appliance that is directly heated by generating a magnetic field through a working coil 12, which is a transmission coil of the wireless power transmission apparatus 10, and can be an electronic product that is not a general cooking container. An example thereof may be a wireless electric kettle or a wireless electric rice cooker. The small home appliance that does not have the reception coil 15 can include a pickup coil to supply power to a module that requires driving power from a region for performing a main operation, that is, a region except for a region that receives heat and performs a function. The pickup coil can be positioned away from a region corresponding to the working coil 12 that is a transmission coil, and can wirelessly receive power and can supply power to a module, for example, a control module such as a communication module, an interface, or a display.

The general cooking container may refer to a container including an electrical resistance component that can be heated by a magnetic field 20 generated from the working coil 12 and through which the magnetic field 20 passes. When a material of the cooking container includes an electrical resistance component, the magnetic field 20 can generate eddy current in the cooking container. The eddy current can heat the heating container, and the heat can be conducted and transmitted to an internal side of the cooking container. Thus, contents in the cooking container can be cooked.

When a foreign object is positioned at a position of the target object 1, the foreign object tends to be a material having an electrical resistance component that impedes wireless power transfer (WPT) and may be an iron bar such as a spoon or a chopstick.

The wireless power transmission apparatus 10 can function as an electronic induction heating apparatus or a wireless power transmission apparatus according to user's selection.

For example, the wireless power transmission apparatus 10 can function in an induction heating mode for heating a general heating container or can function in a wireless power transmission mode for wirelessly transmitting power to a small home appliance that has or does not have the reception coil 15 with respect to one working coil 12 according to the user's selection.

The multi-functional wireless power transmission apparatus 10 can include an upper glass 11 and a casing including at least on working coil 12, as shown in FIG. 2. First, components included in the wireless power transmission apparatus 10 will be described in detail.

The upper glass 11 can protect an internal part of the wireless power transmission apparatus 10 and can support the target object 1. For example, the upper glass 11 can be made of tempered glass of a ceramic material obtained by synthesizing various minerals. Thus, the upper glass 11 can protect an internal part of the wireless power transmission apparatus 10 from the outside. The upper glass 11 can support the target object 1 positioned thereon. Thus, the target object 1 can be positioned on the upper glass 11.

The working coil 12 can wirelessly transmit power to the target object 1 depending on the type of the target object 1 or a user mode selection, or can generate a magnetic field for heating, and at least one working coil 12 can be configured according to a design. In some implementations, a region in which the target object 1 is disposed can be determined depending on each coil 12.

A user input unit for determining a mode of the wireless power transmission apparatus can be disposed at one side of the upper glass 11.

For example, the working coil 12 can be disposed below the upper glass 11. Current may or may not flow in the working coil 12 depending on power on/off state of the wireless power transmission apparatus 10. When current flows in the working coil 12, the amount of current flowing in the working coil 12 can also vary depending on the mode and output of the wireless power transmission apparatus 10.

When current flows in the working coil 12, the working coil 12 can generate the magnetic field 20. As the amount of current flowing in the working coil 12 is increased, the generated magnetic field 20 can also increase.

A direction of the magnetic field 20 generated by the working coil 12 can be determined depending on a direction of the current flowing in the working coil 12. Thus, when alternating current (AC) flows in the working coil 12, the direction of the magnetic field 20 can be converted by a frequency of the AC. For example, when AC of 60 Hz flows in the working coil 12, the direction of the magnetic field can be converted 60 times per second.

A driving module that is electrically connected to the user input unit and the working coil 12, can receive a voltage and current from a commercially available power source, can convert the received voltage and current, and can supply power to the working coil 12 according to user input. In some implementations, the driving module can be disposed in the casing.

In some implementations, the driving module can be a plurality of chips installed on one printed circuit board. In some implementations, the driving module can be one integrated chip.

The wireless power transmission apparatus 10 can include ferrite 13 that can protect the driving module.

For example, the ferrite 13 can function as a shield that blocks influence of the magnetic field generated by the working coil 12 or an electromagnetic field generated outside of the working coil 12 on the driving module in the wireless power transmission apparatus 10.

To this end, the ferrite 13 can be made of a material with very high permeability. The ferrite 13 can guide the magnetic field introduced into the wireless power transmission apparatus 10 to flow through the ferrite 13 rather than being discharged.

In some implementations, the wireless power transmission apparatus 10 can include at least one working coil 12. In some implementations, the wireless power transmission apparatus 10 can include more than one working coils 12.

The respective working coils 12 can have different sizes, and current of specific frequency can flow in each working coil 12 through inverter-driving under control of the driving module, and thus, in the induction heating mode, target power corresponding to a firepower level selected by a user can be generated and heat corresponding to the target power can be generated.

In the wireless power transmission mode, current of different frequencies can flow through inverter-driving under control of the driving module, and thus, power can be wirelessly transmitted to a small home appliance.

To this end, the respective working coils 12 can be connected to inverters in the driving module, and the plurality of working coils 12 can be connected in parallel or series to each other by a switch and can be connected to an inverter.

When the corresponding wireless power transmission apparatus 10 is operated in the induction heating mode according to user selection, a magnetic field can be generated by current of a predetermined frequency and can be transmitted through a heating container positioned on the upper glass 11.

In some implementations, when an electrical resistance component is included in a material of a cooking container, the magnetic field can generate eddy current in the cooking container. The eddy current can heat the cooking container, and the heat can be conducted and transmitted to an internal side of the cooking container. Thus, the induction heating mode can proceed in a method of cooking contents in the cooking container.

Movement of the magnetic field generated in the working coil 12 by the ferrite 13 is shown in FIG. 2.

With reference to a circuit diagram in which the wireless power transmission apparatus 10 is operated in the induction heating mode, the wireless power transmission apparatus 10 can have a structure shown in FIG. 3.

For example, FIG. 3 is a circuit diagram of a wireless power transmission apparatus in an electromagnetic induction heating mode when the wireless power transmission apparatus includes an inverter 140 and an working coil 12 (hereinafter, referred to as 150). The wireless power transmission apparatus 10 in the electromagnetic induction heating mode can include a rectifier 120, a direct current (DC) link capacitor 130, an inverter 140, the working coil 12 (150), and a resonance capacitor 160.

An external power source 110 can be an alternating current (AC) input power source. The external power source 110 can supply AC power to an electromagnetic induction heating cooking device. For example, the external power source 110 can supply AC voltage to the rectifier 120 of the electromagnetic induction heating cooking device.

The rectifier 120 can be an electrical circuit for converting AC into DC and can convert AC voltage supplied through the external power source 110 into DC voltage. In some implementations, opposite ends of DC output through the rectifier 120 can refer to DC links. A voltage measured at the DC opposite ends can refer to a DC link voltage. When a resonance curve is not changed, output power can be varied depending on a DC link voltage. The DC link capacitor 130 can function as a buffer between the external power source 110 and the inverter 140. For example, the DC link capacitor 130 can maintain the DC link voltage converted through the rectifier 120 and can supply the voltage to the inverter 140.

The inverter 140 can switch a voltage applied to the working coil 12 (150) and can allow high-frequency current to flow in the working coil 12 (150). For example, the inverter 140 can drive a switching device including an insulated gate bipolar transistor (IGBT) and can allow high-frequency current to flow in the working coil 12 (150), and thus, a high-frequency magnetic field can be formed in the working coil 12 (150).

Current may or may not flow in the working coil 12 (150) according to whether the switching device is driven. For example, when current flows in the working coil 12 (150), a magnetic field can be generated. As current flows in the working coil 12 (150), a magnetic field can be generated to heat a cooking container.

As such, in the electromagnetic induction heating mode, the wireless power transmission apparatus 10 can heat the cooking container using the working coil 12 (150) in electromagnetic induction.

When the wireless power transmission apparatus 10 functions in a wireless power transmission mode, the working coil 12 (150) used in inductive heating can be used in wireless power transfer (WPT) in the same way.

Wireless power transfer (WPT) refers to technology of transmitting power without wire. A method used in wireless power transfer (WPT) can include a magnetic induction (MI) method or a magnetic resonance (MR) method. The magnetic induction (MI) method can use a magnetic induction phenomenon between a primary coil and a secondary coil. For example, when current is injected into a primary (transmission) coil, a magnetic field can be generated. Induced current can be generated in the secondary (reception) coil by the magnetic field generated in the primary coil. The induced current generated in the secondary coil can charge a battery. The magnetic field generated using a magnetic induction method may be weak, and thus, the primary coil and the secondary coil need to be positioned adjacent to each other in order to charge the battery.

The magnetic resonance (MR) method is a method in which primary and secondary coils transmit and receive power using the same frequency. For example, when a magnetic field that oscillates at a resonance frequency is generated in the primary coil, the secondary coil can be designed at the same resonance frequency as the magnetic field generated in the primary coil and can receive energy. In some implementations, it can be possible to charge the battery at a relatively long distance.

As such, a corresponding function can be selectively performed according to user mode selection using the same structure by using a coil used in wireless power transfer (WPT) as the working coil 12 used in the induction heating mode.

Referring back to FIG. 3, one side of the working coil 12 (150) can be connected to a node of a switching device of the inverter 140, and the other side of the working coil 12 (150) can be connected to the resonance capacitor 160. The switching device can be driven by a controller 190 (see FIG. 4) and can be controlled according to a switching time output from the controller 190, and as the switching device is alternately operated, a high-frequency voltage can be applied to the working coil 12 (150). An on/off time of the switching device applied from the controller 190 can be controlled to be gradually compensated for, and thus, a voltage applied to the working coil 12 (150) can be changed to a high voltage from a low voltage.

The controller 190 can control an overall operation of the wireless power transmission apparatus 10. For example, the controller 190 can control each component included in the wireless power transmission apparatus 10. The resonance capacitor 160 can be a component that functions as a buffer. The resonance capacitor 160 can adjust a saturation voltage increase rate while the switching device is turned off and can affect energy loss during a turn-off time. The resonance capacitor 160 can include a plurality of capacitors 160a and 160b that are connected in series to each other between the working coil 12 (150) and the DC opposite ends to which a voltage from the rectifier 120 is output. The resonance capacitor 160 can include a first resonance capacitor 160a and a second resonance capacitor 160b. For example, a first end of the first resonance capacitor 160a can be connected to a first end to which a voltage from the rectifier 120 is output, and a second end can be connected to a node of the working coil 12 (150) and the second resonance capacitor 160b. Similarly, a first end of the second resonance capacitor 160b can be connected to the second end to which a low voltage is output from the rectifier 120, and a second end can be connected to the node of the working coil 12 (150) and the first resonance capacitor 160a.

Capacitance of the first resonance capacitor 160a can be the same as capacitance of the second resonance capacitor 160b.

Depending on capacitance of the resonance capacitor 160, a resonance frequency of the wireless power transmission apparatus 10 can be determined.

For example, the resonance frequency of the wireless power transmission apparatus 10 configured as the circuit diagram shown in FIG. 3 can be determined depending on inductance of the working coil 12 (150) and capacitance of the resonance capacitor 160. A resonance curve can be formed based on the resonance frequency determined depending on the inductance of the working coil 12 (150) and the capacitance of the resonance capacitor 160. The resonance curve can represent output power depending on a frequency.

A quality (Q) factor can be determined depending on an inductance value of the working coil 12(150) included in the multi-functional wireless power transmission apparatus 10 and a capacitance value of the resonance capacitor 160. The resonance curve can be differently formed depending on the Q factor. A frequency at which maximum power is output can refer to a resonance frequency (f0), and the wireless power transmission apparatus can use a frequency of a right region based on the resonance frequency (f0) of the resonance curve. Thus, the wireless power transmission apparatus 10 can reduce a frequency to lower a firepower stage and can increase the frequency to increase the firepower stage. The wireless power transmission apparatus 10 can adjust such a frequency and can adjust output power. The wireless power transmission apparatus 10 can use a frequency corresponding to a range to a second frequency from a first frequency. For example, the wireless power transmission apparatus can change a current frequency to any one frequency included in the range to the second frequency from the first frequency and can adjust firepower. The first frequency as a minimum frequency and the second frequency as a maximum frequency that are to be controlled by the wireless power transmission apparatus 10 can be preset. For example, the first frequency can be 20 kHz and the second frequency can be 75 kHz.

As the first frequency is set as 20 kHz, the wireless power transmission apparatus 10 can limit the case in which an audible frequency (about 16 Hz to 20 kHz) is used. Thus, noise of the wireless power transmission apparatus 10 cab be reduced. In some implementations, the second frequency can be set to an IGBT maximum switching frequency. The IGBT maximum switching frequency can refer to a maximum frequency for driving in consideration of internal pressure, capacitance, and the like of the IGBT switching device. For example, the IGBT maximum switching frequency can be 75 kHz.

As such, a frequency that is generally used to heat a cooking took by induction heating in the wireless power transmission apparatus 10 can be between 20 kHz to 75 kHz.

A frequency used in wireless power transfer (WPT) can be different from a frequency used for induction heating the cooking container by the wireless power transmission apparatus 10. For example, the frequency used in wireless power transfer (WPT) can be a frequency with a higher band than a frequency used to heat a cooking container by the wireless power transmission apparatus.

Thus, the wireless power transmission apparatus can provide both a cooking tool heating function and a wireless power transfer (WPT) function through the same working coil 12 (150) by adjusting a resonance frequency.

FIG. 4 is an example of a circuit diagram of the case in which a wireless power transmission apparatus is operated in a wireless power transmission mode.

FIG. 4 shows an example of the wireless power transmission apparatus 10 that selectively provides a cooking container induction heating mode and a wireless power transmission mode.

The wireless power transmission apparatus 10 can include the rectifier 120, the DC link capacitor 130, the inverter 140, the working coil 12 (150), the resonance capacitors 160a and 160b, WPT capacitors 170a and 170b, and mode conversion switches 180a and 180b.

The same description as the description given with reference to FIG. 3 is omitted here.

The working coil 12 (150) can generate a magnetic field as current flows therein. In some implementations, the magnetic field generated in the working coil 12 (150) can heat the target object 1 of a secondary side as being transmitted through the cooking container of the secondary side.

In some implementations, the magnetic field generated by the working coil 12 (150) can transmit power to a small home appliance of the secondary side as being transmitted through the small home appliance of the secondary side.

The resonance capacitors 160a and 160b can be the same as in the description given with reference to FIG. 3. That is, the resonance capacitors 160a and 160b shown in FIG. 4 can be the same as the resonance capacitor included in the wireless power transmission apparatus 10 as described above with reference to FIG. 3.

As the wireless power transmission apparatus 10 is operated in a wireless power transmission mode or a cooking container induction heating mode, the resonance capacitors 160a and 160b may or may not be connected in parallel to the WPT capacitors 170a and 170b.

In some implementations, the WPT capacitors 170a and 170b can be connected in parallel to the resonance capacitors 160a and 160b. The WPT capacitors 170a and 170b can be a component for lowering a resonance frequency of the wireless power transfer (WPT) to operate an electromagnetic induction heating cooking device 100 in the wireless power transmission mode. For example, when the wireless power transmission apparatus 10 is operated in the cooking container induction heating mode, the WPT capacitors 170a and 170b may not be connected to the resonance capacitors 160a and 160b. By way of further example, when the wireless power transmission apparatus 10 is operated in the wireless power transmission mode, the WPT capacitors 170a and 170b can be connected in parallel to the resonance capacitors 160a and 160b. When the WPT capacitors 170a and 170b are connected in parallel to the resonance capacitors 160a and 160b, composite capacitance can increase. When the composite capacitance increases, the resonance frequency (f0) can be reduced.

For example, when the electromagnetic induction heating cooking device 100 is operated in the wireless power transmission mode, the resonance frequency (f0) can be reduced. As such, the wireless power transmission apparatus 10 can reduce the resonance frequency (f0) and can wirelessly transmit power to a product of a secondary side using the original inverter 140 and working coil 12 (150).

The WPT capacitors 170a and 170b can include the first WPT capacitor 170a and the second WPT capacitor 170b. In some implementations, the first WPT capacitor 170a can be connected in parallel to the first resonance capacitor 160a, and the second WPT capacitor 170b can be connected in parallel to the second resonance capacitor 160b.

Capacitance of the first WPT capacitor 170a can be the same as capacitance of the second WPT capacitor 170b.

The mode conversion switches 180a and 180b can determine whether the WPT capacitors 170a and 170b and the resonance capacitors 160a and 160b are connected in parallel to each other. For example, the mode conversion switches 180a and 180b can perform control to connect or not connect the WPT capacitors 170a and 170b in parallel to the resonance capacitors 160a and 160b.

For example, when the mode conversion switches 180a and 180b are turned on, a circuit can be shorted, and the WPT capacitors 170a and 170b and the resonance capacitors 160a and 160b can be connected in parallel to each other. Thus, as described above, the resonance frequency (f0) can be reduced.

In some implementations, when the mode conversion switches 180a and 180b are turned off, the circuit can be open, and the WPT capacitors 170a and 170b may not be connected to the resonance capacitors 160a and 160b. Thus, the resonance frequency (f0) may not be changed.

The mode conversion switches 180a and 180b can include the first mode conversion switch 180a and the second mode conversion switch 180b, and the first mode conversion switch 180a and the second mode conversion switch 180b can be simultaneously operated. The first mode conversion switch 180a can determine whether the first WPT capacitor 170a and the first resonance capacitor 160a are connected in parallel to each other, and the second mode conversion switch 180b can determine whether the second WPT capacitor 170b and the second resonance capacitor 160b are connected in parallel to each other.

In some implementations, the mode conversion switches 180a and 180b can be controlled depending on an operation mode, and can be operated in the wireless power transmission mode or the induction heating mode through the same working coil 12 (150).

For example, one mode of the two modes can be selectively operated through a user input unit according to user selection.

The wireless power transmission apparatus 10 can further include the controller 190 for controlling on and off of the conversion switches 180a and 180b depending on such mode selection, controlling on and off a switching device of the inverter 140, and controlling an overall operation of a driving module.

In some implementations, when the induction heating mode is selected using a user input unit, the controller 190 of the wireless power transmission apparatus 10 can be operated in the induction heating mode, and the conversion switches 180a and 180b can be turned off to perform induction heating.

In some implementations, when the wireless power transmission mode of the target object 1 is selected using the user input unit, the wireless power transmission apparatus 10 can be operated in the wireless power transmission mode, the conversion switches 180a and 180b can be turned on, and wireless power transfer (WPT) can be performed at a resonance frequency based on composite capacitance.

In some implementations, the wireless power transmission apparatus 10 needs to perform whether the target object 1 positioned on the upper glass 11 is capable of wirelessly transmitting power.

Even if a user selects the wireless power transmission mode through the user input unit, when the target object 1 positioned on the wireless power transmission apparatus is an electronic product that is not capable of performing wireless power transfer (WPT) or a small home appliance having no reception coil but not a small home appliance having a reception coil, the wireless power transmission apparatus 10 can differently perform the operation.

When the operation is performed based on only mode selection information received through the user input unit, overcurrent may flow in the target object 1 having no reception coil, or in the case of a foreign object, a waste of electricity may also be caused due to overcurrent and high heat may be accompanied, and thus, the apparatus may be damaged.

Thus, even if selection information of the wireless power transmission mode is received through the user input unit, a procedure of determining whether the target object 1 is for executing the corresponding mode can be required.

Hereinafter, the procedure of determining the target object 1 in a wireless power transmission mode will be described in detail.

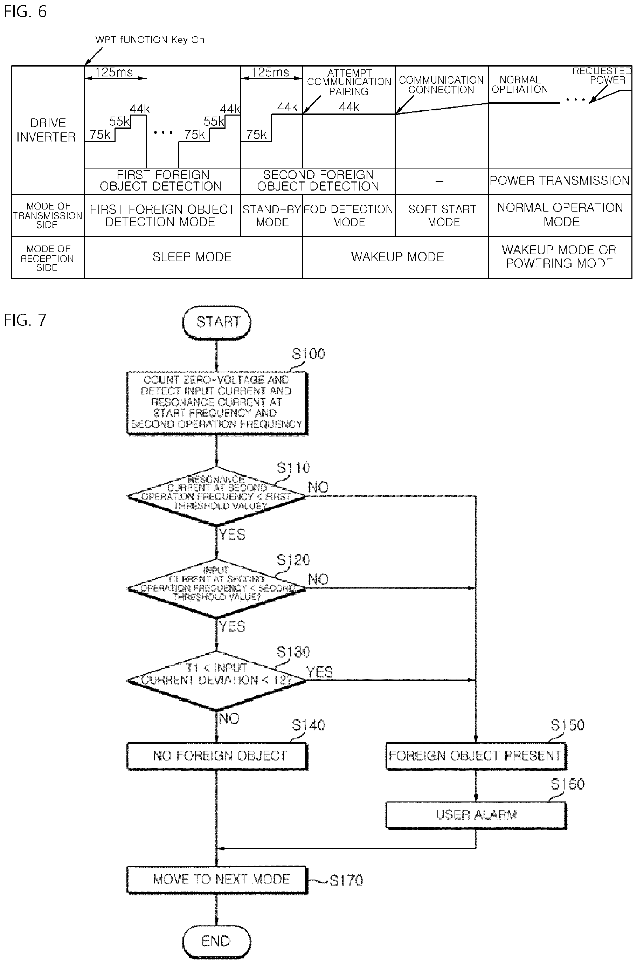

FIG. 5 is a schematic flowchart of an exemplary process for a mode of a wireless power transmission apparatus for induction heating. FIG. 6 is a diagram illustrating a structure of a transmission apparatus and a reception apparatus with respect to the flowchart of FIG. 5.

Referring to FIGS. 5 and 6, when the controller 190 receives selection information corresponding to selection of an icon or a button of a wireless power transmission mode by selecting the icon or the button from a user input unit, the wireless power transmission apparatus for induction heating can be converted into the wireless power transmission mode and can perform an operation.

The wireless power transmission apparatus 10 for induction heating can have a preparation period through a plurality of operations to a normal operation mode S60, that is, an operation of wirelessly emitting power towards the reception target object 1.

The wireless power transmission apparatus 10 for induction heating can detect whether there is a foreign object that is not the target object 1 on the upper glass 11 in the preparation period prior to the normal operation mode S60.

For example, whether only a foreign object is present without the target object 1 and whether the foreign object is present with the target object 1 can be continuously distinguished.

In some implementations, such detection of a foreign object can be sequentially performed during preparation to the normal operation mode S60 in the preparation period rather than being simultaneously performed in one operation.

For example, when receiving mode selection information (S10), the wireless power transmission apparatus 10 can enter a first foreign object detection mode S20 in terms of a transmission side.

The wireless power transmission apparatus 10 defined as the transmission side can execute a second foreign object detection mode S40 and a soft start mode S50 through the first foreign object detection mode S20 to a stand-by mode S30.

Prior to entry into the normal operation mode S60 from the soft start mode S50, detection of all the target objects 1 can be terminated and corresponding power can be wirelessly transmitted (S70).

The first foreign object detection mode S20 can be simultaneously executed when a user pushes a wireless power transmission mode icon or button of a user input unit, and the controller 190 can oscillate various frequencies for simultaneously performing detection of a foreign object with determination of whether the target object 1 is positioned on the upper glass 11.

In some implementations, a switching device of the inverter 140 can be alternately turned on and off to allow current to flow according to the oscillation frequency. Whether the target object 1 identified in the first foreign object detection mode S20 is a general heating container or a small home appliance having a reception coil can be determined, and whether a foreign object is currently positioned on the working coil 12 can be determined while a start frequency is switched to a first operation frequency and a second frequency.

In the first foreign object detection mode S20, whether the target object 1 is present and whether a foreign object is present can be determined, and when the target object 1 having a reception coil is present, whether the reception coil 15 and the working coil 12 of the target object 1 are aligned with each other, that is, whether a current state is concentricity or eccentricity can be determined.

In the first foreign object detection mode S20, the wireless power transmission apparatus 10 can attempt wireless communication with the target object 1, and reception through wireless communication can be started by communication pairing when power of a small home appliance that is the target object 1 is supplied in the second foreign object detection mode S40.

An idle mode can be defined as a start mode in which the controller 190 is activated by supplying power to a driving module including the controller 190 of the wireless power transmission apparatus 10 for induction heating when a user pushes and turns on a power button through a user input unit.

In the idle mode, wired communication between the user input unit and the driving module can be performed.

The stand-by mode S30 can be an operation after the first foreign object detection mode S20, and can be defined as a frequency change period in which the inverter 140 is driven at a second operation frequency in order to determine a foreign object when the target object 1 is present in a region for wireless power transfer.

In some implementations, in the stand-by mode S30, frequency sweep can occur from an initial operation frequency to a second operation frequency, and when the second operation frequency is reached, a current mode may substantially enter the second foreign object detection mode S40.

In some implementations, the second operation frequency may not oscillate from the beginning because oscillation needs to be sequentially induced since driving noise is generated when the apparatus is driven at the second operation frequency, that is, a lower frequency than the initial operation frequency in a state in which a voltage of a DC link is charged.

The second foreign object detection mode S40 can be defined as a period in which induced voltage information of the target object is received and whether a foreign object is present in a state in which the apparatus is driven at the second operation frequency and communication pairing with a reception side, that is, the target object 1 is performed.

In some implementations, when the foreign object is determined to be present in this period, the apparatus can enter the idle mode again and information indicating that the foreign object is present can be signaled to a user, and when there is no foreign object, the apparatus can enter the soft start mode S50.

For example, a state that is activated by injecting power into the reception side, that is, the target object 1 due to induced current from the second foreign object detection mode S40 can be defined as a wakeup mode, and in this case, wireless communication is paired between the reception side and the transmission side and communication can begin therebetween.

The soft start mode S50 can be defined as a period in which power of a level requested by the target object 1 is changed to a frequency corresponding to corresponding power for an operation in the wireless power transmission apparatus 10.

When the power of the level requested by the target object 1 is approximately reached in the soft start mode S50, a current mode can enter the normal operation mode S60.

In the soft start mode S50, an additional detection mode can be executed.

The additional detection mode can be defined as a period in which additional detection is performed for recheck prior to power transfer of a small home appliance.

For example, in the additional detection mode, a mode that is actually selected by a user can be rechecked, and whether there is an error of judgment between no load and a small home appliance can be rechecked.

The normal operation mode S60 can be defined as a period in which change in requested output is monitored and whether there is a difference between actual output and the requested output can be determined with a constant level at power of the level requested by the target object 1.

In some implementations, when there is the difference between the actual output and the requested output, if the actual output is lower than the requested output, a power up mode can proceed to lower an operation frequency and to increase output, and if the actual output is higher than the requested output, a power down mode can proceed to increase the operation frequency and to lower the output.

At a side of the target object 1, according to user operation selection and operation time of the target object 1 or according to request for low power or high power, the controller 190 can perform an operation using requested output based on the request.

Prior to the normal operation mode while the aforementioned modes are sequentially or inversely performed, the state of the target object 1 can be preferentially determined in the preparation period, a foreign object can be removed, and then, the current can enter the normal operation mode S60.

Hereinafter, a foreign object detection operation will be described in detail with reference to FIGS. 7 to 13.

Referring to FIGS. 7 to 10, an operation in a first foreign object detection mode will be described.

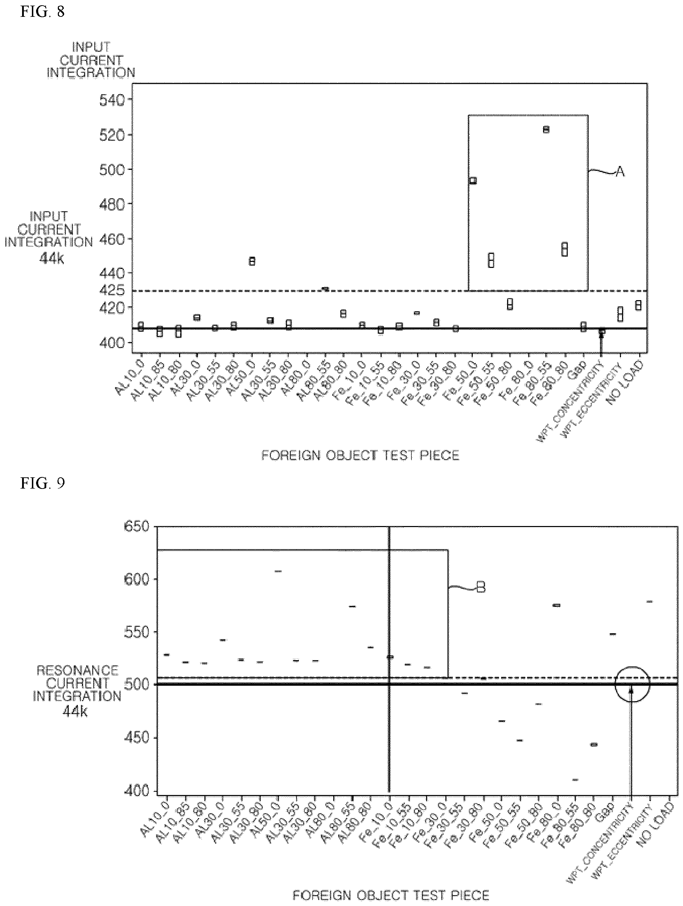

FIG. 7 is a flowchart of an exemplary process for first foreign object determination in a wireless power transmission mode of a wireless power transmission apparatus for induction heating. FIGS. 8 to 10 are exemplary graphs for explaining FIG. 7.

Referring to FIG. 7, the wireless power transmission apparatus 10 for induction heating can change a frequency to the first operation frequency and the second operation frequency from a start frequency in the first foreign object detection mode and can supply current in the working coil while frequencies are mixed and an inverter oscillates.

In the first foreign object detection mode, whether there is a foreign object can be determined depending on input current, resonance current, and an input current inclination at this time.

The start frequency can be a set basic frequency and can be, for example, about 75 kHz.

As shown in FIG. 7, zero-voltage count can be started with respect to a switching signal provided to a switching device of the inverter 140 (S100).

In some implementations, the zero-voltage count can be defined as performing detection at a time at which a rectified reference voltage applied at 120 Hz is 0 V after commercially available power that is reference power of the wireless power transmission apparatus 10 for induction heating is rectified with respect to a reference voltage of 60 Hz.

As such, detection or count can be performed when the reference voltage is 0, and thus, an output value for minimizing influence of an input reference voltage may be calculated.

In some implementations, the input reference voltage is commercially available power, and thus, a description will be given based on 120 Hz that is a frequency of the rectified voltage. In some implementations, detection or count can be performed when the reference voltage is 0.

In some implementations, count can be configured to be performed at 120 Hz, that is, every 8.33 ms. In some implementations, the count can be configured to be performed at different frequencies.

When the first foreign object detection mode begins, the controller 190 can perform zero-voltage count to find an accurate zero-voltage time from a start time of the first foreign object detection mode, that is, a time point of receiving a mode selection signal from a user input unit.

The controller 190 can start zero-voltage count for a predetermined time and can enhance the accuracy of zero-voltage count to reduce error. In some implementations, the predetermined time can be at least one second and can be set to a time that is not greater than 3 seconds.

When there is no counted value for a reference time, the controller 190 can set a reference time of entry into an idle mode.

The reference time can be set to 3 seconds as a maximum value for the predetermined time.

The controller 190 can perform count of reading input current and resonance current at each zero-voltage time.

In some implementations, the resonance current can refer to current supplied to a transmission coil, that is, the working coil 12 (hereinafter, referred to as 150), and corresponding resonance current can be read and integration can be performed on predetermined counts, and thus, whether there is a foreign object, whether the target object 1 includes the reception coil 15, and whether a current state is eccentricity can be determined.

The controller 190 can simultaneously read input current in each zero-voltage count, and the input current can refer to current flowing in a switching device of the inverter 140 at a corresponding time.

Integration can be performed on predetermined counts of the input current, and whether there is a foreign object can be determined on a corresponding integrated value.

When zero-voltage count is performed, all counts can be performed for a predetermined time (e.g., 1 second), and after 1 second elapses, first foreign object detection preparation can be determined to be completed, and all parameters can be initialized. In some implementations, the parameter can be reset and initialized, for example, blank processing of a timer and flag value.

As such, when a predetermined time elapses, preparation can be determined to be completed and a next count can be performed.

The controller 190 can perform zero-voltage count in a next period when a predetermined time elapses, that is, the controller 190 can perform count at 1 second + 8.33 ms.

For example, a frequency of a switching signal applied to the inverter 140 can be set to an initial frequency and a switching device of the inverter 140 can be driven, and for example, when the initial frequency is 75 kHz, the frequency of the switching signal can be set to 75 kHz. In some implementations, the controller 190 can detect input current and resonance current and can read a corresponding value in each zero-voltage count during counts a predetermined number of times.

In some implementations, the number of times can be continuous 8 times. In some implementations, the number of times can be less than or more than 8 times.

For example, when count for detecting input current and resonance current at a start frequency is performed 8 times, a current frequency can be transitioned to a next frequency after a 10th count, that is, 1 second + 83.8 ms elapses.

In some implementations, the transitioned frequency can be the first frequency, but the transition frequency can be the second operation frequency.

For example, in the first foreign object detection mode S20, three frequencies can be combined to make the inverter 140 oscillate, but in contrast, transition can be possible using only the start frequency and the second operation frequency.

In some implementations, the first operation frequency can be used to determine whether eccentricity occurs and whether the reception coil 15 of the target object 1 is present, can be a threshold frequency at which overpower is not exerted, and can be, for example, 55 kHz.

However, the first operation frequency can be a lower frequency than the initial frequency and can be a higher frequency than the second operation frequency at which wireless communication is performed then.

For example, when the first operation frequency is 55 kHz, the second operation frequency can be 44 kHz.

The second operation frequency can be a maximum frequency for detecting a target object.

The controller 190 can detect input current and resonance current in each zero-voltage count during counts a predetermined number of times from a next count after the inverter 140 begins to be driven at the second operation frequency and can read a corresponding value.

In some implementations, the number of times can be continuous 8 times, and detection can be performed with respect to the start frequency by the same count as the number of times that the input current and the resonance current are detected.

For example, when count for detecting input current and resonance current at the second operation frequency is performed 8 times, whether a foreign object is present can be determined based on data detected after a 10th count, that is, 1 second + 83.8 ms elapses.

In some implementations, the controller 190 can perform integration on values of the resonance current and input current read in respective counts.

For example, the controller 190 can perform integration on the input current values detected in eight counts at the start frequency and can perform integration on the resonance current values.

In addition, the controller 190 can perform integration on the input current detected in eight counts at the second operation frequency and can perform integration on the resonance current value.

As such, when calculation of an integrated value of resonance current and the input current at each frequency is terminated, the controller 190 can compare the integrated value of resonance current for the second operation frequency with a first threshold value (S110).

When the integrated value of resonance current for the second operation frequency is equal to or greater than the first threshold value, it can be determined that a value of the resonance current abnormally increased and a foreign object is present (S150).

When the integrated value of resonance current for the second operation frequency is less than the first threshold value, the controller 190 can compare an integrated value of input current for the second operation frequency with a second threshold value (S120).

When a value of the input current for the second operation frequency is equal to or greater than the second threshold value, it can be determined that the value of the input current abnormally increased and a foreign object is present abnormally increased and a foreign object is present (S150).

When the integrated value of the input current for the second operation frequency is less than the second threshold value, the controller 190 can calculate a deviation of the integrated value of input current between the second operation frequency and the start frequency.

In some implementations, when a deviation of the integrated value of input current between frequencies is greater than a first value and is smaller than a second value (S130), it can be determined that a deviation of a frequency variation satisfies a predetermined range and a foreign object is present (S150).

Thus, the controller 190 can determine that a foreign object is not present only when the integrated value of resonance current for the second operation frequency is smaller than the first threshold value, the integrated value of input current is greater than the second threshold value, and a deviation of the integrated value of input current between the start frequency and the second operation frequency is (i) smaller than the first value or (ii) greater than the second value (S140).

When it is determined that there is no foreign object, the first foreign object detection mode can be terminated and a current mode can enter a stand-by mode (S170). When determining that the foreign object is present, the controller 190 can guide removal of the foreign object through a user alarm (S60) and can enter an idle mode until the foreign object is removed.

The first threshold value, the second threshold value, the first value, and the second value will be set through the following experiment.

First, the experiment is performed using metal such as iron (Fe) or aluminum (Al) as an example of the foreign object, and as a test piece having a circular shape, test pieces having a thickness of 2 mm and a diameter of 10, 30, 50, and 80 mm were manufactured.

With respect to the test piece, a standardized induction coil with 150 mm, that is, 6 inches as a diameter of the working coil 12 is selected, and when the corresponding working coil 12 is disposed in a circular shape as shown in FIG. 1, the integrated value of input current at a second operation frequency, an integrated value of resonance current, and a difference between the integrated value of resonance current and the integrated value of input current at the start frequency and the second operation frequency are calculated at positions spaced apart from the center by 0, 55, and 80 mm, and are schematized in FIGS. 8 to 10.

FIG. 8 illustrates detection of the integrated value of input current at the second operation frequency with respect to each test piece.

The X axis in FIG. 8 indicates the state of each test piece, and the Y axis indicates the integrated value of input current at the second operation frequency.

For example, in the case of Al_10_0, each test piece of the X axis is an Al test piece with a diameter of 10 mm, and indicates a foreign object in a state in which the distance of the working coil 12 from the center is 0.

As depicted in FIG. 8, some of integrated values of input current at the second operation frequency with respect to each test piece can be derived from a first threshold value or greater.

For example, other test pieces indicated by a box A have a value equal to or less than the first threshold value, and in contrast, the test piece of the corresponding box A can be filtered to the integrated value of input current using a high value.

Thus, the first threshold value can be 420 to 440 mA and, for example, can be 425 mA. In some implementations, the first threshold value can be a value other than 425 mA.

FIG. 9 illustrates detection of the integrated value of resonance current at the second operation frequency with respect to each test piece.

The X axis in FIG. 9 indicates the state of each test piece, and the Y axis indicates the integrated value of resonance current at the second operation frequency.

For example, in the case of Al_10_0, each test piece of the X axis is an Al test piece with a diameter of 10 mm, and indicates a foreign object in a state in which the distance of the working coil 12 from the center is 0.

As depicted in FIG. 9, some of integrated values of resonance current for the second operation frequency with respect to each test piece are derived from a second threshold value or greater.

For example, other test pieces indicated by a box B have a value equal to or less than the second threshold value, and in contrast, the test piece of the corresponding box B can be filtered to the integrated value of resonance current using a high value.

Thus, the second threshold value can be 480 to 520 mA, and, for example, can be 500 mA. In some implementations, the second threshold value can be a value other than 500 mA.

In some implementations, the boxes A and B may not overlap each other, and as such, the integrated value of resonance current and the integrated value of input current at the second operation frequency can be filtered and most foreign object test pieces can be filtered.

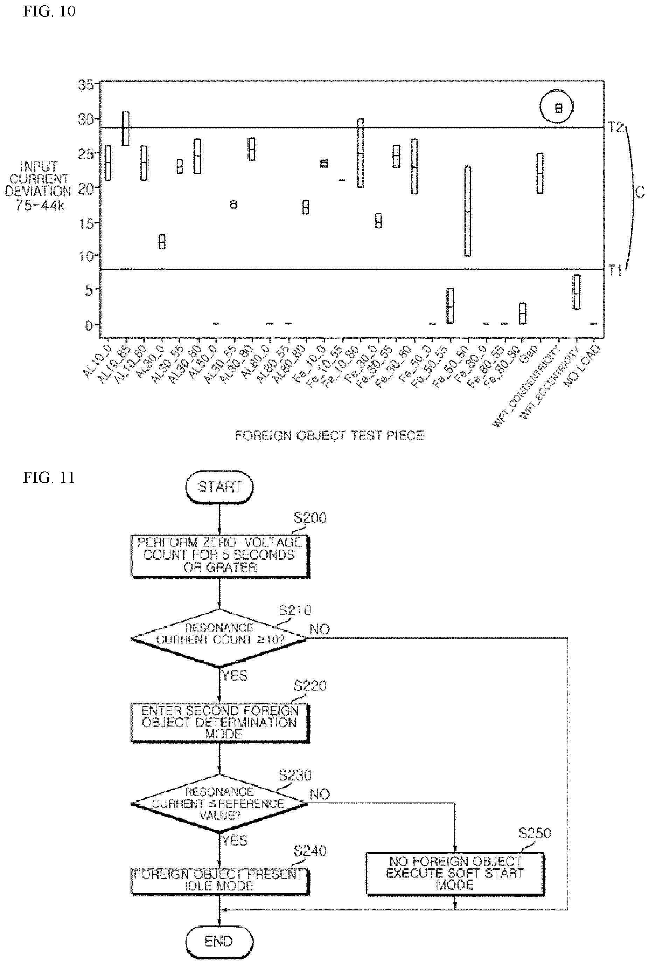

FIG. 10 shows calculation a deviation between the integrated value of input current at the start frequency and the integrated value of input current at the second operation frequency with respect to each test piece.

The X axis in FIG. 10 indicates the state of each test piece, and the Y axis indicates a deviation between the integrated value of input current at the start frequency and the integrated value of input current at the second operation frequency.

For example, in the case of Al_10_0, each test piece of the X axis is an Al test piece with a diameter of 10 mm, and indicates a foreign object in a state in which the distance of the working coil 12 from the center is 0.

As depicted in FIG. 10, a deviation value for two frequencies with respect to each test piece is mostly contained between the first and second values.

For example, as observed from a box C, most of remaining pieces that are not included in FIGS. 8 and 9 are included in the box C

The first value can be 7 and the second value can be 28.

Such a result can be summarized as shown in Table 1 below.

**[Table 1]**

| Frequency | | | 44kHz | 44kHz | 44 kHz to 75 kHz |
|---|---|---|---|---|---|
| | Diameter | eccentricity | Input current | Resonance current | Deviation |
| Al | 10 | 0 | | 0 | 0 |
| | | 55 | | 0 | |
| | | 80 | | 0 | 0 |
| | 30 | 0 | | 0 | 0 |
| | | 55 | | 0 | 0 |
| | | 80 | | 0 | 0 |
| | 50 | 0 | 0 | 0 | |
| | | 55 | | 0 | 0 |
| | | 80 | | 0 | 0 |
| | 80 | 0 | | 0 | |
| | | 55 | 0 | 0 | |
| | | 80 | | 0 | 0 |
| Fe | 10 | 0 | | 0 | 0 |
| | | 55 | | 0 | 0 |
| | | 80 | | 0 | 0 |
| | 30 | 0 | | | 0 |
| | | 55 | | | 0 |
| | | 80 | | | 0 |
| | 50 | 0 | 0 | | |
| | | 55 | 0 | | |
| | | 80 | | | 0 |
| | 80 | 0 | 0 | | |
| | | 55 | 0 | | |
| | | 80 | 0 | | |

As shown in Table 1 above, when all the operations of FIGS. 8 to 10 are performed, all foreign objects of the selected test pieces can be filtered.

Thus, it can be possible to filter all foreign objects as a detection target by detection of a foreign object of FIG. 7.

It would be obvious to one of ordinary skill in the art that each threshold is changed depending on a number of times of counts, the size of a reception coil, the size of a test piece, or the like.

When the first foreign object detection mode S20 is terminated and a current mode enters the stand-by mode S30 to completely start frequency transition, the second foreign object detection mode S40 can begin and whether a foreign object is present at a corresponding time can be redetermined.

When the second foreign object detection mode S40 begins, the controller 190 can read resonance current and resonance voltage in each count while performing zero-voltage count for a predetermined time or greater (S200).

In some implementations, an operation frequency applied to the inverter 140 can have the same value as the second operation frequency and can be 44 kHz that is a frequency to be lowered to the maximum prior to communication with the target object 1.

In some implementations, values of the resonance voltage and the resonance current of the working coil 12 can be read with respect to the second operation frequency as a fixed frequency.

In some implementations, as described above, like in the first foreign object detection mode S20, integration can be performed on values of resonance current read in plural counts and can be used to determine a foreign object, and to this end, whether a current count is equal to or greater than a predetermined number times can be determined (S210).

As such, when counts are performed a predetermined number of times, for example, 10 times, integration can be performed on each of the resonance voltage and the resonance current during the corresponding count and can be calculated as basic data for determination.

Then, a current mode can enter the second foreign object detection mode S220.

The controller 190 can store a reference value of the integrated value of resonance current for all operation frequencies as data and can compare the corresponding reference value with the detected integrated value of resonance current (S230).

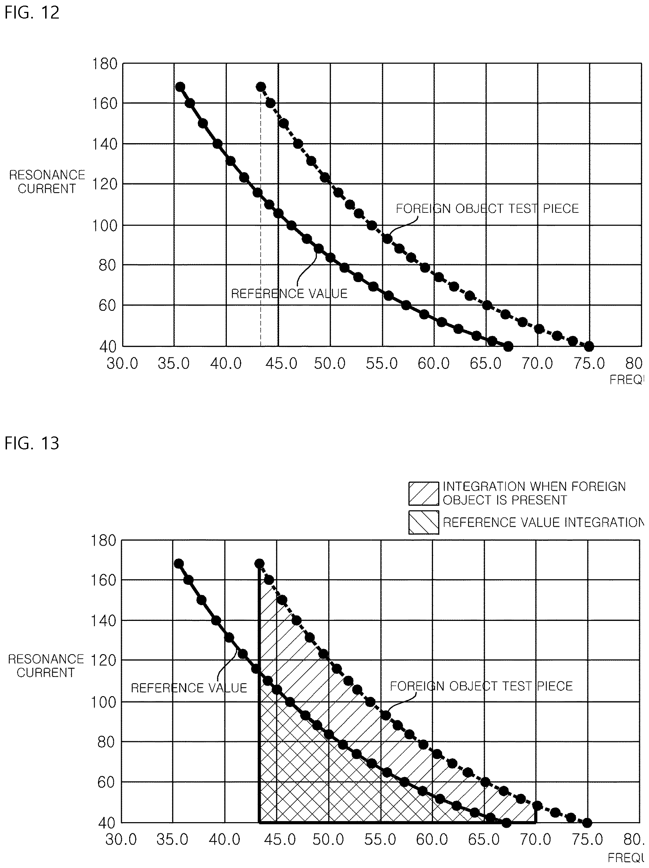

When a foreign object is present, magnetic flux transmitted to the reception coil 15 from the working coil 12 can be blocked by the foreign object and induction may not be partially performed as shown in FIG. 12.

Thus, when the foreign object is present, a value of the resonance current at the corresponding second operation frequency, for example, 44 kHz can increase.

As such, the controller 190 can compare the reference value with the calculated integrated value and thus can determine whether the foreign object is present.

When the integrated value of resonance current is equal to or less than an integrated reference value, it can be determined that a foreign object is not present, a current mode can enter a soft start mode, and preparation for wireless power transfer (WPT) can be performed (S250).

When the integrated value of resonance current is greater than the integrated reference value, the foreign object may be determined to be present, this may alarm a user, and a current mode may enter the idle mode (S240).

Although FIG. 11 illustrates only resonance current, resonance voltage can be detected as well as comparison of resonance current and can be compared with resonance voltage data for the stored second operation frequency, and whether a foreign object is present can be determined.

For the resonance voltage, when a foreign object is present, the resonance voltage can also increase due to increase in resonance current.

The wireless power transmission apparatus for induction heating can perform calculation by comparing resonance current values for a plurality of operation frequencies with the reference value data like in FIG. 13.

For example, referring to FIG. 13, the controller 190 can perform frequency sweep during zero-voltage count in the second foreign object detection mode S40.

That is, frequency sweep can be performed every count, and in contrast, frequency sweep can be designed to be performed for several counts every frequency.

For example, a resonance current value in each operation can be read while frequency sweep corresponding operations can be performed to a second operation frequency of 44 kHz from a start frequency of 70 kHz.

In some implementations, a difference between swept frequencies can be reduced by 1 kHz, and thus, values of resonance current at each operation frequency can be integrated.

The controller 190 can compare the corresponding integrated value with a stored integrated value of resonance current of reference values.

That is, according to the result, with regard to the integrated value of resonance current measured like in FIG. 13 and the stored integrated value of resonance current of reference values, the integrated value of resonance current measured when a foreign object is present can be much larger than an integrated value of reference values.

Thus, when frequency weep is performed and a value obtained by integrating resonance current values for each operation frequency is compared with an integrated value of reference values, the case in which a foreign object is present and the case in which there is no foreign object can be obviously distinguished.

As such, it can be possible to detect a foreign object using resonance current in the second foreign object detection mode S40, and it can be possible to clearly determine whether a foreign object is present and to safely perform wireless power transfer (WPT) up to a normal operation mode.

Through the above solution, the multi-functional wireless power transmission device using one working coil can detect whether a foreign object is present, can compensate for this, and can perform wireless power transfer (WPT) in the wireless power transmission mode while selectively driving the wireless power transmission mode or the induction heating mode.

Even if information is not received from a positioned target small home appliance when user mode selection is a wireless power transmission mode, whether the foreign object is present can be determined using only information of a transmission side, and thus, it can be possible to remove a foreign object prior to power transfer and then to safely transmit power.

As such, when the wireless power transmission mode is selected, a foreign object can be removed and power transfer can be performed, thereby ensuring power transfer efficiency.

It can be possible to transmit power in the state in which a foreign object is removed, thereby remarkably reducing a risk of ignition or fuming.

In addition, whether a foreign object is present can be determined by a plurality of combined parameters but not a single detection value, and thus, accuracy can be enhanced and variation of a fine detection value can be extended, and accordingly, the foreign object can be more sensitively detected.

## Claims

1. A wireless power transmission apparatus (10) for induction heating and for wirelessly transmitting power to a target object (1) comprising:
a working coil (12) configured to induction-heat the target object (1) and to wirelessly transmit power to the target object (1) depending on a selected mode;
an inverter (140) configured to be operated based on an operation frequency for providing power to the working coil (12, 150); and
a controller (190) configured to change the mode depending on a selection of a user and to control the operation frequency depending on the mode,
wherein the controller (90) is configured to determine whether a foreign object is positioned on the working coil (12) in a preparation period prior to wireless power transfer (WPT) when the user selects a wireless power transmission mode,
wherein, when the user selects the mode at a user input unit, the controller (190) is configured to read an input current and/or a resonance current and to determine whether the foreign object is present while entering a first foreign object detection mode and to drive the inverter (140) with a start frequency and an operation frequency, and
wherein the controller (190) is configured to read the resonance current and/or the input current a plurality of times for a predetermined time period, perform integration on each of the resonance current and/or the input current, and determine whether the foreign object is present based on an integrated value.

2. The wireless power transmission apparatus of claim 1, wherein the controller (190) is configured to apply the preparation period prior to a normal mode for performing the wireless power transfer (WPT); wherein, when the preparation period begins, the first foreign object detection mode is executed and a second foreign object detection mode is executed to determine whether a foreign object is present on the working coil before the preparation period is terminated.

3. The wireless power transmission apparatus of claim 1 or 2, further comprising at least one of
an upper glass (11) on which the target object (1) is positioned; and
a user input unit configured to receive a mode selection from the user.

4. The wireless power transmission apparatus of claim 1, wherein the controller (190) is configured to determine whether the foreign object is present based on a difference in the input current at the operation frequency and at the start frequency.

5. The wireless power transmission apparatus of claim 1, wherein, when an integrated value of the resonance current is equal to or greater than a first threshold value and/or an integrated value of the input current is equal to or greater than a second threshold value, the controller (190) is configured to determine that a foreign object is not present.

6. The wireless power transmission apparatus of claim 1 or 5, wherein, when a deviation in an integrated value of the input current is between a first value and a second value, the controller (190) is configured to determine that the foreign object is present.

7. The wireless power transmission apparatus of any one of the preceding claims 2-6, wherein, when entering the second foreign object detection mode, the controller (190) is configured to read the resonance current and to compare the resonance current with a reference value while driving the inverter (140) at the operation frequency.

8. The wireless power transmission apparatus of any one of the preceding claims 4-7, wherein the wireless power transmission apparatus for induction heating is configured to store a value of resonance current for the plurality of operation frequencies when a foreign object is not present, as the reference value.

9. The wireless power transmission apparatus of any one of the preceding claims 5-8, wherein, while sweeping the operation frequency for a predetermined time period, the controller (190) is configured to detect resonance current at the swept operation frequency, to compare the detected integrated value of resonance current with an integrated value of a reference value of resonance current at the swept operation frequency, and to determine whether the foreign object is present.

10. A method of driving a wireless power transmission apparatus (10) for wirelessly transmitting power to and for induction heating a target object (1), the wireless power transmission apparatus (10) including a working coil (12) configured to induction-heat the target object (1) and to wirelessly transmit power to the target object (1) depending on the mode, the method comprising:
upon selection of a wireless power transmission mode, a preparation operation for detecting the target object (1), and
determining whether a foreign object is positioned on the working coil (12) while varying an operation frequency of an inverter (140) for wireless power transfer; and
a normal operation mode operation of performing the wireless power transmission by controlling an inverter (140) based on the operation frequency,
wherein when the user selects the mode at a user input unit, the determining whether the foreign object is positioned on the working coil (12) includes:
reading an input current and/or a resonance current a plurality of times for a predetermined time period while entering a first foreign object detection mode and driving the inverter (140) with a start frequency and an operation frequency,
performing integration on each of the resonance current and/or the input current,
determining that a foreign object is not present when an integrated value of the resonance current is equal to or greater than a first threshold value and/or an integrated value of the input current is equal to or greater than a second threshold value, and
determining that the foreign object is present when a deviation in the integrated value of the input current is between a first value and a second value.

11. The method of claim 10, wherein the preparation operation includes:
the first foreign object detection operation of reading resonance current and/or input current and determining whether the foreign object is present while driving the inverter (140) at a start frequency and a specific operation frequency; and
a second foreign object detection operation of reading the resonance current and/or re-determining whether the foreign object is present while driving the inverter (140) at the specific operation frequency prior to the normal operation mode.

12. The method of claim 11, wherein the second foreign object detection operation includes, while sweeping the operation frequency for a predetermined time period, detecting resonance current at the swept operation frequency, comparing the detected integrated value of resonance current with an integrated value of a reference value of resonance current at the swept operation frequency, and determining whether the foreign object is present.

## Patentansprüche

1. Vorrichtung (10) zum drahtlosen Übertragen von Energie zur Induktionsheizung und zum drahtlosen Übertragen von Energie an einen Zielgegenstand (1), die Folgendes umfasst:
eine Arbeitsspule (12), die konfiguriert ist, abhängig von einer ausgewählten Betriebsart den Zielgegenstand (1) per Induktion zu erwärmen und drahtlos Energie an den Zielgegenstand (1) zu übertragen;
einen Wechselrichter (140), der konfiguriert ist, auf der Grundlage einer Betriebsfrequenz zum Bereitstellen von Energie an die Arbeitsspule (12, 150) betrieben zu werden; und
eine Steuereinheit (190), die konfiguriert ist, die Betriebsart abhängig von einer Auswahl eines Benutzers zu ändern und die Betriebsfrequenz abhängig von der Betriebsart zu steuern,
wobei die Steuereinheit (190) konfiguriert ist, in einem Vorbereitungszeitraum vor der drahtlosen Übertragung (WPT) von Energie zu bestimmen, ob ein Fremdkörper auf der Arbeitsspule (12) angeordnet ist, wenn der Benutzer eine Betriebsart zum drahtlosen Übertragen von Energie auswählt,
wobei die Steuereinheit (190) konfiguriert ist, dann, wenn der Benutzer die Betriebsart an einer Benutzereingabeeinheit auswählt, einen Eingangsstrom und/oder einen Resonanzstrom auszulesen und zu bestimmen, ob der Fremdkörper vorhanden ist, während eine erste Betriebsart zum Detektieren von Fremdkörpern eingegeben wird, und den Wechselrichter (140) mit einer Startfrequenz und einer Betriebsfrequenz anzusteuern, und
wobei die Steuereinheit (190) konfiguriert ist, den Resonanzstrom und/oder den Eingangsstrom mehrmals für einen vorgegebenen Zeitraum auszulesen, eine Integration jeweils des Resonanzstroms und/oder des Eingangsstroms durchzuführen und auf der Grundlage eines integrierten Wertes zu bestimmen, ob der Fremdkörper vorhanden ist.

2. Vorrichtung zum drahtlosen Übertragen von Energie nach Anspruch 1, wobei die Steuereinheit (190) konfiguriert ist, den Vorbereitungszeitraum vor einer regulären Betriebsart zum Durchführen der drahtlosen Übertragung (WPT) von Energie anzuwenden; wobei dann, wenn der Vorbereitungszeitraum beginnt, die erste Betriebsart zum Detektieren von Fremdkörpern ausgeführt wird und eine zweite Betriebsart zum Detektieren von Fremdkörpern ausgeführt wird, um zu bestimmen, ob ein Fremdkörper auf der Arbeitsspule vorhanden ist, bevor der Vorbereitungszeitraum beendet ist.

3. Vorrichtung zum drahtlosen Übertragen von Energie nach Anspruch 1 oder 2, die ferner Folgendes umfasst:
ein oberes Glas (11), auf dem der Zielgegenstand (1) angeordnet wird; und/oder
eine Benutzereingabeeinheit, die konfiguriert ist, eine Betriebsartauswahl vom Benutzer zu empfangen.

4. Vorrichtung zum drahtlosen Übertragen von Energie nach Anspruch 1, wobei die Steuereinheit (190) konfiguriert ist, auf der Grundlage einer Differenz des Eingangsstroms bei der Betriebsfrequenz und bei der Startfrequenz zu bestimmen, ob der Fremdkörper vorhanden ist.

5. Vorrichtung zum drahtlosen Übertragen von Energie nach Anspruch 1, wobei die Steuereinheit (190) konfiguriert ist, dann, wenn ein integrierter Wert des Resonanzstroms größer oder gleich einem ersten Schwellenwert ist und/oder ein integrierter Wert des Eingangsstroms größer oder gleich einem zweiten Schwellenwert ist, zu bestimmen, dass kein Fremdkörper vorhanden ist.

6. Vorrichtung zum drahtlosen Übertragen von Energie nach Anspruch 1 oder 5, wobei die Steuereinheit (190) konfiguriert ist, dann, wenn eine Abweichung eines integrierten Wertes des Eingangsstroms zwischen einem ersten Wert und einem zweiten Wert liegt, zu bestimmen, dass der Fremdkörper vorhanden ist.

7. Vorrichtung zum drahtlosen Übertragen von Energie nach einem der vorhergehenden Ansprüche 2-6, wobei die Steuereinheit (190) konfiguriert ist, dann, wenn die zweite Betriebsart zum Detektieren von Fremdkörpern eingegeben wird, den Resonanzstrom auszulesen und den Resonanzstrom mit einem Referenzwert zu vergleichen, während der Wechselrichter mit der Betriebsfrequenz angesteuert wird.

8. Vorrichtung zum drahtlosen Übertragen von Energie nach einem der vorhergehenden Ansprüche 4-7, wobei die Vorrichtung zum drahtlosen Übertragen von Energie zur Induktionsheizung konfiguriert ist, einen Wert des Resonanzstroms für die mehreren Betriebsfrequenzen, wenn kein Fremdkörper vorhanden ist, als den Referenzwert zu speichern.

9. Vorrichtung zum drahtlosen Übertragen von Energie nach einem der vorhergehenden Ansprüche 5-8, wobei die Steuereinheit (190) konfiguriert ist,, während die Betriebsfrequenz für einen vorgegebenen Zeitraum überstrichen wird, den Resonanzstrom bei der überstrichenen Betriebsfrequenz zu detektieren, den detektierten integrierten Wert des Resonanzstroms mit einem integrierten Wert eines Referenzwertes des Resonanzstroms bei der überstrichenen Betriebsfrequenz zu vergleichen und zu bestimmen, ob der Fremdgegenstand vorhanden ist.

10. Verfahren zum Ansteuern einer Vorrichtung (10) zum drahtlosen Übertragen von Energie zum drahtlosen Übertragen von Energie an einen Zielgegenstand (1) und seiner Induktionsheizung, wobei die Vorrichtung (10) zum drahtlosen Übertragen von Energie eine Arbeitsspule (12) enthält, die konfiguriert ist, abhängig von der Betriebsart den Zielgegenstand (1) per Induktion zu erwärmen und drahtlos Energie an den Zielgegenstand (1) zu übertragen, wobei das Verfahren Folgendes umfasst:
bei Auswahl einer Betriebsart zum drahtlosen Übertragen von Energie einen Vorbereitungsvorgang zum Detektieren des Zielgegenstands (1), und
Bestimmen, ob ein Fremdkörper auf der Arbeitsspule (12) angeordnet ist, während eine Betriebsfrequenz eines Wechselrichters (140) zur drahtlosen Übertragung von Energie verändert wird; und
einen Vorgang einer regulären Betriebsart zum Durchführen der drahtlosen Übertragung von Energie durch Steuern eines Wechselrichters (140) auf der Grundlage der Betriebsfrequenz,
wobei dann, wenn der Benutzer die Betriebsart an einer Benutzereingabeeinheit auswählt, das Bestimmen, ob der Fremdkörper auf der Arbeitsspule (12) angeordnet ist, Folgendes umfasst:
mehrmaliges Auslesen eines Eingangsstroms und/oder eines Resonanzstroms für einen vorgegebenen Zeitraum, während eine erste Betriebsart zum Detektieren von Fremdkörpern eingegeben wird und der Wechselrichter (140) mit einer Startfrequenz und einer Betriebsfrequenz angesteuert wird;
Durchführen einer Integration jeweils des Resonanzstroms und/oder des Eingangsstroms;
Bestimmen, dass kein Fremdkörper vorhanden ist, wenn ein integrierter Wert des Resonanzstroms größer oder gleich einem ersten Schwellenwert ist und/oder ein integrierter Wert des Eingangsstroms größer oder gleich einem zweiten Schwellenwert ist; und
Bestimmen, dass der Fremdkörper vorhanden ist, wenn eine Abweichung des integrierten Wertes des Eingangsstroms zwischen einem ersten Wert und einem zweiten Wert liegt.

11. Verfahren nach Anspruch 10, wobei der Vorbereitungsvorgang Folgendes umfasst:
den ersten Fremdkörperdetektionsvorgang des Auslesens des Resonanzstroms und/oder des Eingangsstroms und des Bestimmens, ob der Fremdkörper vorhanden ist, während der Wechselrichter (140) mit einer Startfrequenz und einer bestimmten Betriebsfrequenz angesteuert wird; und
einen zweiten Fremdkörperdetektionsvorgang des Auslesens des Resonanzstroms und/oder des erneuten Bestimmens, ob der Fremdkörper vorhanden ist, während der Wechselrichter (140) mit der bestimmten Betriebsfrequenz angesteuert wird, vor der regulären Betriebsart.

12. Verfahren nach Anspruch 11, wobei der zweite Fremdkörperdetektionsvorgang während des Überstreichens der Betriebsfrequenz für einen vorgegeben Zeitraum das Detektieren des Resonanzstroms bei der überstrichenen Betriebsfrequenz, das Vergleichen des detektierten integrierten Wertes des Resonanzstroms mit einem integrierten Wert eines Referenzwertes des Resonanzstroms bei der überstrichenen Betriebsfrequenz und das Bestimmen, ob der Fremdkörper vorhanden ist, umfasst.

## Revendications

1. Appareil de transmission d'énergie sans fil (10) pour un chauffage par induction et pour transmettre de manière sans fil de l'énergie à un objet cible (1), comportant :
une bobine de travail (12) configurée pour chauffer l'objet cible (1) par induction et pour transmettre de manière sans fil de l'énergie à l'objet cible (1) en fonction d'un mode sélectionné ;
un onduleur (140) configuré pour fonctionner sur la base d'une fréquence de fonctionnement pour fournir de l'énergie à la bobine de travail (12, 150) ; et
une commande (190) configurée pour changer le mode en fonction d'une sélection d'un utilisateur et pour commander la fréquence de fonctionnement en fonction du mode,
dans lequel la commande (190) est configurée pour déterminer si un objet étranger est positionné sur la bobine de travail (12) pendant une période de préparation avant un transfert d'énergie sans fil (WPT) lorsque l'utilisateur sélectionne un mode de transmission d'énergie sans fil,
dans lequel, lorsque l'utilisateur sélectionne le mode sur une unité d'entrée d'utilisateur, la commande (190) est configurée pour lire un courant d'entrée et/ou un courant de résonance et pour déterminer si l'objet étranger est présent tout en entrant dans un premier mode de détection d'objet étranger et pour exciter l'onduleur (140) avec une fréquence de démarrage et une fréquence de fonctionnement, et
dans lequel la commande (190) est configurée pour lire le courant de résonance et/ou le courant d'entrée une pluralité de fois pendant une période de temps prédéterminée, effectuer une intégration de chaque courant parmi le courant de résonance et/ou le courant d'entrée, et déterminer si l'objet étranger est présent sur la base d'une valeur intégrée.

2. Appareil de transmission d'énergie sans fil selon la revendication 1, dans lequel la commande (190) est configurée pour appliquer la période de préparation avant un mode normal pour réaliser le transfert d'énergie sans fil (WPT) ; dans lequel, lorsque la période de préparation débute, le premier mode de détection d'objet étranger est exécuté et un second mode de détection d'objet étranger est exécuté pour déterminer si un objet étranger est présent sur la bobine de travail avant que la période de préparation soit terminée.

3. Appareil de transmission d'énergie sans fil selon la revendication 1 ou 2, comportant en outre au moins un élément parmi :
une vitre supérieure (11) sur laquelle l'objet cible (1) est positionné ; et
une unité d'entrée d'utilisateur configurée pour recevoir une sélection de mode de l'utilisateur.

4. Appareil de transmission d'énergie sans fil selon la revendication 1, dans lequel la commande (190) est configurée pour déterminer si l'objet étranger est présent sur la base d'une différence du courant d'entrée à la fréquence de fonctionnement et à la fréquence de démarrage.

5. Appareil de transmission d'énergie sans fil selon la revendication 1, dans lequel, lorsqu'une valeur intégrée du courant de résonance est égale ou supérieure à une première valeur de seuil et/ou qu'une valeur intégrée du courant d'entrée est égale ou supérieure à une seconde valeur de seuil, la commande (190) est configurée pour déterminer qu'un objet étranger n'est pas présent.

6. Appareil de transmission d'énergie sans fil selon la revendication 1 ou 5, dans lequel, lorsqu'une déviation d'une valeur intégrée du courant d'entrée se situe entre une première valeur et une seconde valeur, la commande (190) est configurée pour déterminer que l'objet étranger est présent.

7. Appareil de transmission d'énergie sans fil selon l'une quelconque des revendications 2 à 6 précédentes, dans lequel, lors de l'entrée dans le second mode de détection d'objet étranger, la commande (190) est configurée pour lire le courant de résonance et pour comparer le courant de résonance avec une valeur de référence tout en excitant l'onduleur (140) à la fréquence de fonctionnement.

8. Appareil de transmission d'énergie sans fil selon l'une quelconque des revendications 4 à 7 précédentes, dans lequel l'appareil de transmission d'énergie sans fil pour un chauffage par induction est configuré pour stocker une valeur de courant de résonance pour la pluralité de fréquences de fonctionnement lorsqu'un objet étranger n'est pas présent, en tant que valeur de référence.

9. Appareil de transmission d'énergie sans fil selon l'une quelconque des revendications 5 à 8 précédentes, dans lequel, tout en balayant la fréquence de fonctionnement pendant une période de temps prédéterminée, la commande (190) est configurée pour détecter un courant de résonance à la fréquence de fonctionnement balayée, pour comparer la valeur intégrée détectée de courant de résonance avec une valeur intégrée d'une valeur de référence de courant de résonance à la fréquence de fonctionnement balayée, et pour déterminer si l'objet étranger est présent.

10. Procédé d'excitation d'un appareil de transmission d'énergie sans fil (10) pour transmettre de manière sans fil de l'énergie à un objet cible (1) et pour un chauffage par induction de celui-ci, l'appareil de transmission d'énergie sans fil (10) incluant une bobine de travail (12) configurée pour chauffer l'objet cible (1) par induction et pour transmettre de manière sans fil de l'énergie à l'objet cible (1) en fonction du mode, le procédé comportant :
lors de la sélection d'un mode de transmission d'énergie sans fil, une opération de préparation pour détecter l'objet cible (1), et
déterminer si un objet étranger est positionné sur la bobine de travail (12) en faisant varier une fréquence de fonctionnement d'un onduleur (140) en vue d'un transfert d'énergie sans fil ; et
un fonctionnement en mode de fonctionnement normal consistant à réaliser la transmission d'énergie sans fil en commandant un onduleur (140) sur la base de la fréquence de fonctionnement,
dans lequel lorsque l'utilisateur sélectionne le mode sur une unité d'entrée d'utilisateur, la détermination de si l'objet étranger est positionné sur la bobine de travail (12) inclut de :
lire un courant d'entrée et/ou un courant de résonance une pluralité de fois pendant une période de temps prédéterminée tout en entrant dans un premier mode de détection d'objet étranger et exciter l'onduleur (140) avec une fréquence de démarrage et une fréquence de fonctionnement,
réaliser une intégration sur chaque courant parmi le courant de résonance et/ou le courant d'entrée,
déterminer qu'un objet étranger n'est pas présent lorsqu'une valeur intégrée du courant de résonance est égale ou supérieure à une première valeur de seuil et/ou qu'une valeur intégrée du courant d'entrée est égale ou supérieure à une seconde valeur de seuil, et
déterminer que l'objet étranger est présent lorsqu'une déviation de la valeur intégrée du courant d'entrée se situe entre une première valeur et une seconde valeur.

11. Procédé selon la revendication 10, dans lequel l'opération de préparation inclut :
la première opération de détection d'objet étranger consistant à lire un courant de résonance et/ou un courant d'entrée et déterminer si l'objet étranger est présent tout en excitant l'onduleur (140) à une fréquence de démarrage et une fréquence de fonctionnement spécifique ; et
une seconde opération de détection d'objet étranger consistant à lire le courant de résonance et/ou déterminer à nouveau si l'objet étranger est présent tout en excitant l'onduleur (140) à une fréquence de fonctionnement spécifique avant le mode de fonctionnement normal.

12. Procédé selon la revendication 11, dans lequel la seconde opération de détection d'objet étranger inclut de, tout en balayant la fréquence de fonctionnement pendant une période de temps prédéterminée, détecter un courant de résonance à la fréquence de fonctionnement balayée, comparer la valeur intégrée détectée de courant de résonance avec une valeur intégrée d'une valeur de référence de courant de résonance à la fréquence de fonctionnement balayée, et déterminer si l'objet étranger est présent.
